# EUROPEAN PATENT SPECIFICATION

(11) **EP 3 053 808 B1**
(45) Date of publication and mention of the grant of the patent: **08.11.2017**
(21) Application number: 15154070.5
(22) Date of filing: 06.02.2015
(51) Int. Cl.: B60W 30/09, B62D 15/02, B60Q 9/00, G08G 1/16

(54) **Driver assistance system and method**
Fahrassistenzsystem und -verfahren
Système et procédé d'assistance de conducteur

(43) Date of publication of application: 10.08.2016
(73) Proprietor: Continental Automotive GmbH, 30165 Hannover (DE)
(72) Inventor: Lee, Hui Keng, 7344684 Woodlands (SG); Tee, Zhen Xiang, 734684 Woodlands (SG)
(74) Representative: Büchner, Jörg

(56) References cited:
- EP-A2- 1 447 271
- EP-A2- 2 647 549
- WO-A1-2012/045323
- DE-A1-102008 036 009
- DE-A1-102011 003 881
- DE-A1-102012 203 228

## Description

The present invention relates to a driver assistance system. Driver assistance systems may be used to assist a driver, for example to park a vehicle. Sensors may be provided on the vehicle which can measure the lateral distance between the vehicle and an obstacle such as a kerb or a wall. When the distance is less than a predetermined value, the driver may be alerted, for example by an audio and/or visual signal that the vehicle has reached the correct stopping point.

DE 10 2008 028 222 A1 discloses a method and device for measuring a distance and height of an obstacle relative to the vehicle. The sensors are located on the front and rear wheel arches of the vehicle bodywork. The method and device may be used to avoid damage to the vehicle and/or tyre.

DE 10 2012 203228 A1 is considered as the closest prior art according to the preamble of claims 1 and 10, and discloses a method for collision avoidance in which a position of the location and movement of the obstacle is determined and a steering angle of rear wheels of the motor is adjusted.

EP 1 447 271 A2 relates to an apparatus and a method for surveying the area of a motor vehicle to avoid collisions with obstacles, which could result in driving the motor vehicle in a particular direction clashes.

DE 10 2008 036009 A1 describes a method for protecting a vehicle collision, involving determining sensor information of a surrounding field sensor of a vehicle and providing a surrounding field map from the sensor information of the surrounding field sensor.

EP 2 647 549 A2 relates to a parking control apparatus and a method for providing an alarm as detecting a collision risk of a vehicle with an obstacle in advance during all the time while the vehicle moves under parking control.
However, further driver assistance systems are desirable to assist the driver in avoiding damaging the vehicle bodywork by colliding with obstacles in the vicinity of the vehicle.

It is, therefore, an object to provide a driver assistance system to assist the driver in avoiding damaging the vehicle bodywork by colliding with obstacles in the vicinity of the vehicle.

A driving assistance system for a vehicle is provided which comprises detection means for detecting the distance between an obstacle and a side of the vehicle, determination means for determining the turning degree angle of the vehicle and processing means. The processing means is configured to receive information indicative of the distance between the obstacle and the side of the vehicle from the detection means, receive information indicative of the turning degree angle of the vehicle from the determination means, calculate a risk of at least a portion of the side of the vehicle hitting the obstacle based on the distance between the obstacle and the side of the vehicle, the turning degree angle and the length of the vehicle, and activate means for averting the risk of hitting the obstacle, if the calculated risk is greater than a threshold value, wherein the means for averting the risk comprises a means for producing a first warning signal, indicating that the driver will have to either reduce the turning angle or reverse to find a better position to turn, and a second warning signal, indicating that there is no way of averting of hitting the obstacle by changing the turning angle.

The driver assistance system may be used to assess the risk of the side of the vehicle hitting an obstruction such as a kerb.

A driver of a motor vehicle may cause a vehicle to hit an obstacle positioned to the side of the vehicle, such as a kerb, during parking or when turning out from a junction by driving too close to the kerb, since the driver is unable to see the distance between the vehicle and the obstacle. This can cause damage to the car body and/or wheel. This lack of visibility is exacerbated by the length of the vehicle. The longer the length of the vehicle the higher the chance of damage caused by hitting the obstacle. This can be avoided by use of the driver assistance system according to one of the embodiments described herein.

In an embodiment, the detection means comprises at least two sensors configured to detect the distance between the obstacle and the side of the vehicle. The two sensors may be spaced apart from one another and may be used to detect the distance between the side of the vehicle and an obstacle at two points spaced apart from one another or may be used in combination to measure the distance to an object by triangulation. Two sensors may be arranged on one or both sides of the vehicle. The sensors may be components of an ultrasonic or radar or lidar distance measuring system, for example.

The determination means for determining the turning angle of the vehicle may include a steering wheel sensor which detects the angle of the steering wheel. The steering wheel sensor may form part of the steering system of the vehicle.

The means for averting the risk may comprise a warning system to alert a driver. The warning system may comprise a visual display and/or an audible signal generator. A visual warning display may be located on the instrument panel of the vehicle. This display can be coded in such a way to tell the driver either that he must change the driving angle or reverse to avoid any collision with the obstacle. The display may be colour coded, for example green may indicate sufficient distance, yellow less than a predetermined safe distance and red may indicate a predicted collision.

In some embodiments, the means for averting the risk is an active system and may comprise means to automatically adjust the vehicle movement, for example, means to automatically control the steering wheel angle and/or the braking of the vehicle. For example, the means for averting the risk may send instructions to the vehicle steering and/or braking systems to take over control of the steering and braking systems, respectively, and to control them in such a way as to avoid collision with the obstacle.

In an embodiment, the processing means is further configured to predict the path of the side of the vehicle based on the turning angle and the length of the vehicle, determine the positon of the obstacle and calculate the risk of the side of the vehicle hitting the obstacle based on the predicted path of the side of the vehicle and the position of the obstacle. This predictive embodiment may be useful if the path of the vehicle crosses the obstacle at a point in front of the vehicle even though there is a sufficiently large distance between the side of the vehicle and the obstacle at the present position of the vehicle.

A method of determining the risk of a vehicle hitting an obstacle whilst turning is provided which comprises detecting the distance between an obstacle and a side of the vehicle, determining the turning degree angle of the vehicle, calculating the risk of at least a portion of the side of the vehicle hitting the obstacle based on the distance of the side of the vehicle from the obstacle, the turning degree angle and the length of the vehicle, and triggering a warning if the calculated risk is greater than a threshold value, and producing a first warning signal, if the driver will have to either reduce the turning angle or reverse to find a better position to turn, or a second warning signal, in the case that there is no way of averting of hitting the obstacle by changing the turning angle.

The method may further comprise predicting the path of the side of the vehicle based on the turning angle and the length of the vehicle, determining the positon of the obstacle and calculating the risk of the side of the vehicle hitting the obstacle based on the predicted path of the side of the vehicle and the position of the obstacle.

The length of the vehicle may be the length of the side of the vehicle or the length of the wheel base. These values are typ-typically known from the vehicle specifications provided by the vehicle manufacturer.

The triggering the warning may comprise adjusting the steering wheel angle and/or adjusting the braking of the vehicle and/or activating a visual indicator and/or an audible indicator.

A vehicle comprising the driver assistance system according to one of the embodiments described herein is also provided.

A program product is provided which comprises computer program code tangibly embodied thereon that when executed on a processor, causes the processor to perform the method of one of embodiments described herein.

The program product may be a data carrier, such as an optical drive, hard disk, flash memory etc. This embodiment may be useful if the computer program is to upgrade or enhance an existing system. The computer program code may also be stored in memory in a device or a system for image capturing and/or image processing or a device or system coupled to one or more driver assistance systems. This embodiment may be used if a device and system is provided for installation in a vehicle.

Embodiments will now be described with reference to the accompanying drawings.
Figure 1 illustrates a vehicle with a driver assistance system,
Figure 2 illustrates a schematic plan view of a vehicle taking a course that results in collision with a kerb, and
Figure 3 illustrates a schematic plan view of a vehicle using a driver assistance system.

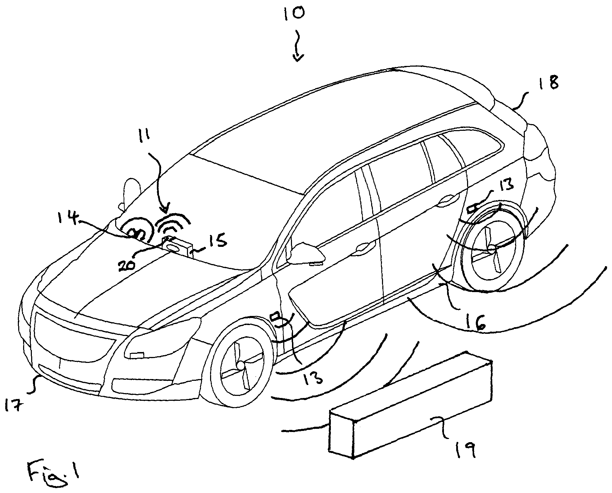

Figure 1 illustrates a vehicle 10 with a driver assistance system 11. The driver assistance system 11 comprises detection means 12 in the form of two sensors 13 for detecting the distance between an obstacle 19 and a side 16 of the vehicle 10, determination means in the form of a steering wheel sensor 14 for determining the turning degree angle of the vehicle 10 and processing means 15.

The processing means 15 is configured to receive information indicative of the distance between the obstacle 19 and the side 16 of the vehicle 10 from the detection means 12, receive information indicative of the turning degree angle of the vehicle 10 from the steering wheel sensor 14 and calculate a risk of at least a portion of the side 16 of the vehicle 10 hitting the obstacle 19 based on the distance between the obstacle 19 and the side 16 of the vehicle 10, the turning degree angle and the length of the vehicle 10. If the calculated risk is greater than a threshold value, the processing means 15 activates means 20 for averting the risk of hitting the obstacle, such as a visual or audio warning or an active system to take control of the steering and/or braking system of the vehicle 10.

At least two sensors 13 are provided on the side 16 of the vehicle 10 towards the front end 17 and the rear 18 of the vehicle 10. This allows for more accurate results to be obtained with respect to the distance between the side 16 of the vehicle 10 and an obstacle 19 arranged adjacent the side 16 of the vehicle 10. The sensors 13 may be placed towards the lower end of the car body so that detection of a kerb is facilitated.

At least two sensors 13 may be provided on each side of the vehicle 10. This allows the driver assistance system 11 to detect obstacles on both sides of the vehicle 10, for example, when the vehicle 10 is driven down a narrow road or a one way street where a kerb is close to the driving path.

The sensors 13 may be ultrasonic sensors. However it will be understood by those skilled in the art that any other suitable sensor may be used. This can include radar or lidar sensor systems.

The sensors 13 may be used to determine the distance between the vehicle body and the kerb whilst the vehicle is in motion, in particular whilst the vehicle is travelling at with a speed above walking pace, for example, more than 10 km/h. The turning angle of the vehicle is determined, for example, by detecting the steering wheel angle.

A processing means 15 is provided for processing the information provided and calculating the risk of hitting the obstruction. The processing means 15 may form part of further driver assistance systems or may be a dedicated device or module.

The operation of the driver assistance system 11 will be described in relation to the obstacle 19 being a road side kerb 22. However it will be understood that the obstruction may be any roadside object which is of sufficient size to damage the body work of the vehicle 10.

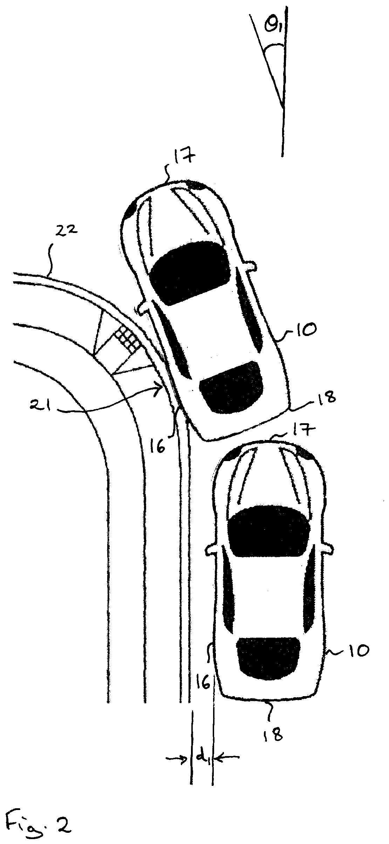

Figure 2 illustrates the path of travel of a vehicle 10 without use of the driver assistance system 11. If the distance d₁ between the side 16 of the vehicle 10 is too small and the turning angle θ₁ too great, a portion of the side 16 of the vehicle 10 towards the rear makes contact with the kerb 22 at region 21 which is likely to cause damage to the bodywork and/or wheel.

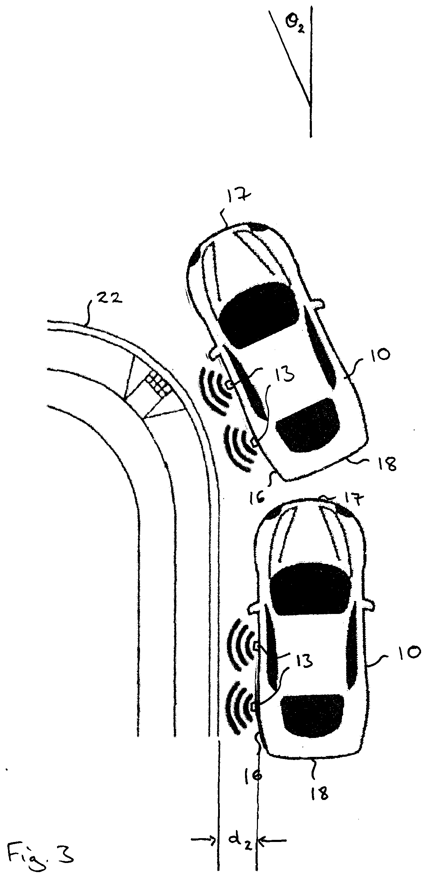

Figure 3 illustrates the path of travel of a vehicle 10 around a curve with use of the driver assistance system 11. In operation, the sensors 13 measure the distance d₂ between the side 16 of the vehicle body and the kerb 22 as the vehicle 10 approaches a corner. This information is transmitted to the processing means 15 on a continuous real time basis. The turning angle θ₂ of the vehicle 10 is also determined from the steering wheel sensor 14 and this information transmitted to the processing device 15 on a continuous real time basis.

The length 1 of the vehicle 10 is stored within the processing means 14. The length may be the length of the vehicle 10 end to end or the length of the wheelbase. Based on this information the processing means determines whether or not the side 16 of the vehicle 10 is going to hit the kerb 22 if the present course is continued. If the determination is that the side of the vehicle 10 will hit the kerb 22, the processing device 15 outputs a signal to a means 20 for averting the risk of hitting the obstacle, such as an audio or visual indicator. An algorithm may be used to calculate when warning should be triggered. For example, if the risk of colliding with an obstacle 19 is greater than a threshold value, the warning may be triggered at a time interval before the expected collision suitably long for the driver to take averting action, for example by braking.

In an embodiment, upon receiving a signal from the processing means 14, a warning display lights up on the instrument panel of the vehicle 10. In an embodiment, one or more yellow LEDs may be used to visually warn the driver that there is a kerb 22 on one side of the vehicle 10 that might cause damage to the vehicle due to the turning angle being too large. The driver will have to either reduce the turning angle or reverse to find a better position to turn. One or more red LEDs may be used to visually warn the driver that there is no way of avoiding the kerb 22 by changing the turning angle. The driver must reverse to find a better position. However, the warning is not limited to using yellow and red LEDs. Any suitable two different signals may be used. The visual display may be supplemented or replaced by an audible signal. This can also have two or more different features audio feature, such as frequency pitch or volume to assist the driver in assessing the risk of a collision and deciding on a suitable course of action.

In an embodiment, the warning system may be supplemented by or replaced with an automatic response by the vehicle 10. Such an active system could include controls to automatically adjust the steering wheel to turn the vehicle 10 and avoid the kerb. A control system to automatically brake the vehicle 10 to prevent collision with the kerb may be provided.

The method according to one of the embodiments described herein may be carried out by computer program code tangibly embodied on a program product that when executed on a processor of the processing means 15, causes the processor to perform the method.

The driver assistance system 11 is not only applicable to automobiles, but also to commercial vehicles such as heavy goods vehicles and buses.

## Claims

1. A driver assistance system (11) for a vehicle (10), comprising:
detection means (12) for detecting the distance between an obstacle (19) and a side (16) of the vehicle (10),
determination means (14) for determining a turning degree angle of the vehicle, and
processing means (15) configured to:
receive information indicative of the distance between the obstacle (19) and the side (16) of the vehicle (10) from the detection means (12);
receive information indicative of the turning degree angle of the vehicle (10) from the determination means (14) ;
calculate a risk of at least a portion of the side (16) of the vehicle (10) hitting the obstacle (19) based on the distance between the obstacle (19) and the side (16) of the vehicle (10), the turning degree angle and the length of the vehicle (10), and
activate means (20) for averting the risk of hitting the obstacle, if the calculated risk is greater than a threshold value, **characterized in that** the means for averting the risk comprises a means for producing a first warning signal, indicating that the driver will have to either reduce the turning angle or reverse to find a better position to turn, and a second warning signal, indicating that there is no way of averting of hitting the obstacle by changing the turning angle.

2. The system (11) according to claim 1, **characterized in that** the detection means (12) comprises at least one sensor (13) configured to detect the distance between the obstacle (19) and the side (16) of the vehicle (10).

3. The system (11) according to claim 2, **characterised in that** two sensors (13) are arranged on the side (16) of the vehicle (10).

4. The system (11) according to claim 3, **characterised in that** the sensors (13) are components of an ultrasonic or radar or lidar distance measuring system.

5. The system (11) according to one of claims 1 to 4, **characterised in that** the means (20) for averting the risk comprises a warning system to alert a driver.

6. The system (11) according to claim 5, **characterised in that** the warning system comprises a visual display and/or an audible signal generator.

7. The system (11) according to one of claims 1 to 6, **characterised in that** the means (20) for averting the risk comprises means to automatically adjust the vehicle movement.

8. The system (11) according to claim 7, **characterised in that** the means to automatically adjust the vehicle movement comprises means to control the steering wheel angle and/or the braking of the vehicle.

9. The system (11) according to one of claims 1 to 8, **characterised in that** the processing unit (15) is further configured to predict the path of the side (16) of the vehicle (10) based on the turning angle and the length of the vehicle (10), determine the positon of the obstacle (19) and calculate the risk of the side (16) of the vehicle (10) hitting the obstacle (19) based on the predicted path of the side (16) of the vehicle (10) and the position of the obstacle (19).

10. A method of determining the risk of a vehicle (10) hitting an obstacle (19) whilst turning, comprising:
detecting the distance between the obstacle (19) and a side (16) of the vehicle (10);
determining the turning degree angle of the vehicle (10),
calculating the risk of at least a portion of the side (16) of the vehicle (10) hitting the obstacle (19), based on the distance of the side (16) of the vehicle (10) from the obstacle (19), the turning degree angle and the length of the vehicle (10), and
triggering a warning if the calculated risk is greater than a threshold value, **characterized by**:
producing a first warning signal, in the case that the driver will have to either reduce the turning angle or reverse to find a better position to turn, or a second warning signal, in the case that there is no way of averting of hitting the obstacle by changing the turning angle.

11. The method according to claim 10, further comprising predicting the path of the side (16) of the vehicle (10) based on the turning angle and the length of the vehicle (10), determining the positon of the obstacle (19) and calculating the risk of the side (16) of the vehicle (10) hitting the obstacle based on the predicted path of the side (16) of the vehicle (10) and the position of the obstacle (19).

12. The method according to claim 11, **characterised in that** the length of the vehicle (10) is the length of the side of the vehicle or the length of the wheel base.

13. The method according to one of claims 10 to 12, **characterised in that** the triggering the warning comprises activating a visual indicator and/or an audible indicator and/or adjusting the steering wheel angle and/or adjusting the braking of the vehicle.

14. A vehicle comprising the driver assistance system (11) according to one of claims 1 to 9.

15. A program product, comprising computer program code tangibly embodied thereon that when executed on a processor, causes the processor to perform the method of one of claims 10 to 13.

## Patentansprüche

1. Fahrerassistenzsystem (11) für ein Fahrzeug (10), umfassend:
Erkennungsmittel (12) zum Erkennen des Abstands zwischen einem Hindernis (19) und einer Seite (16) des Fahrzeugs (10),
Bestimmungsmittel (14) zum Bestimmen eines Drehwinkels des Fahrzeugs und
Verarbeitungsmittel (15), ausgeführt zum:
Empfangen von Informationen zum Abstand zwischen dem Hindernis (19) und der Seite (16) des Fahrzeugs (10) von dem Erkennungsmittel (12);
Empfangen von Informationen zum Drehwinkel des Fahrzeugs (10) von dem Bestimmungsmittel (14);
Berechnen eines Risikos, dass zumindest ein Abschnitt der Seite (16) des Fahrzeugs (10) mit dem Hindernis (19) zusammenprallt, basierend auf dem Abstand zwischen dem Hindernis (19) und der Seite (16) des Fahrzeugs (10), dem Drehwinkel und der Länge des Fahrzeugs (10) und
Aktivieren von Mittel (20) zum Abwenden des Risikos des Zusammenpralls mit dem Hindernis, wenn das berechnete Risiko größer als ein Schwellenwert ist, **dadurch gekennzeichnet, dass** das Mittel zum Abwenden des Risikos ein Mittel zum Erzeugen eines ersten Warnsignals umfasst, das anzeigt, dass der Fahrer entweder den Drehwinkel verkleinern oder zurücksetzen muss, um eine bessere Position zum Abbiegen oder Einbiegen zu finden, und eines zweiten Warnsignals, das anzeigt, dass es keine Möglichkeit gibt, den Zusammenprall mit dem Hindernis durch Ändern des Drehwinkels abzuwenden.

2. System (11) nach Anspruch 1, **dadurch gekennzeichnet, dass** das Erkennungsmittel (12) zumindest einen Sensor (13) umfasst, der ausgelegt ist zum Erkennen des Abstands zwischen dem Hindernis (19) und der Seite (16) des Fahrzeugs (10).

3. System (11) nach Anspruch 2, **dadurch gekennzeichnet, dass** die beiden Sensoren (13) an der Seite (16) des Fahrzeugs (10) angeordnet sind.

4. System (11) nach Anspruch 3, **dadurch gekennzeichnet, dass** die Sensoren (13) Komponenten eines Ultraschall- oder Radar- oder Lidar-Abstandsmesssystems sind.

5. System (11) nach einem der Ansprüche 1 bis 4, **dadurch gekennzeichnet, dass** das Mittel (20) zum Abwenden des Risikos ein Warnsystem zum Alarmieren eines Fahrers umfasst.

6. System (11) nach Anspruch 5, **dadurch gekennzeichnet, dass** das Warnsystem eine optische Anzeige und/oder einen Akustiksignalgenerator umfasst.

7. System (11) nach einem der Ansprüche 1 bis 6, **dadurch gekennzeichnet, dass** das Mittel (20) zum Abwenden des Risikos Mittel zum automatischen Anpassen der Fahrzeugbewegung umfasst.

8. System (11) nach Anspruch 7, **dadurch gekennzeichnet, dass** das Mittel zum automatischen Anpassen der Fahrzeugbewegung Mittel zum Steuern des Lenkradwinkels und/oder des Abbremsens des Fahrzeugs umfasst.

9. System (11) nach einem der Ansprüche 1 bis 8, **dadurch gekennzeichnet, dass** die Verarbeitungseinheit (15) weiterhin ausgelegt ist zum Vorhersagen des Weges der Seite (16) des Fahrzeugs (10) basierend auf dem Drehwinkel und der Länge des Fahrzeugs (10), Bestimmen der Position des Hindernisses (19) und Berechnen des Risikos des Zusammenpralls der Seite (16) des Fahrzeugs (10) mit dem Hindernis (19) basierend auf dem vorhergesagten Weg der Seite (16) des Fahrzeugs (10) und der Position des Hindernisses (19).

10. Verfahren zum Bestimmen des Risikos des Zusammenpralls eines Fahrzeugs (10) mit einem Hindernis (19) beim Abbiegen oder Einbiegen, umfassend:
Erkennen des Abstands zwischen dem Hindernis (19) und einer Seite (16) des Fahrzeugs (10);
Bestimmen des Drehwinkels des Fahrzeugs (10),
Berechnen des Risikos, dass zumindest ein Abschnitt der Seite (16) des Fahrzeugs (10) mit dem Hindernis (19) zusammenprallt, basierend auf dem Abstand der Seite (16) des Fahrzeugs (10) zum Hindernis (19), dem Drehwinkel und der Länge des Fahrzeugs (10), und
Auslösen einer Warnung, wenn das berechnete Risiko größer als ein Schwellenwert ist, **gekennzeichnet durch**:
Erzeugen eines ersten Warnsignals für den Fall, dass der Fahrer entweder den Drehwinkel verkleinern oder zurücksetzen muss, um eine bessere Position zum Abbiegen oder Einbiegen zu finden, oder eines zweiten Warnsignals für den Fall, dass es keine Möglichkeit gibt, den Zusammenprall mit dem Hindernis durch Ändern des Drehwinkels abzuwenden.

11. Verfahren nach Anspruch 10, weiterhin umfassend Vorhersagen des Weges der Seite (16) des Fahrzeugs (10) basierend auf dem Drehwinkel und der Länge des Fahrzeugs (10), Bestimmen der Position des Hindernisses (19) und Berechnen des Risikos des Zusammenpralls der Seite (16) des Fahrzeugs (10) mit dem Hindernis basierend auf dem vorhergesagten Weg der Seite (16) des Fahrzeugs (10) und der Position des Hindernisses (19).

12. Verfahren nach Anspruch 11, **dadurch gekennzeichnet, dass** die Länge des Fahrzeugs (10) die Länge der Seite des Fahrzeugs oder die Länge des Radstands ist.

13. Verfahren nach einem der Ansprüche 10 bis 12, **dadurch gekennzeichnet, dass** das Auslösen der Warnung Aktivieren eines Sichtmelders und/oder eines akustischen Melders und/oder Anpassen des Lenkradwinkels und/oder Anpassen des Abbremsens des Fahrzeugs umfasst.

14. Fahrzeug, umfassend das Fahrerassistenzsystem (11) nach einem der Ansprüche 1 bis 9.

15. Programmerzeugnis, umfassend einen darin greifbar verkörperten Computerprogrammcode, der bei Ausführung auf einem Prozessor den Prozessor dazu veranlasst, das Verfahren nach einem der Ansprüche 10 bis 13 auszuführen.

## Revendications

1. Système d'aide à la conduite (11) pour un véhicule (10), comprenant :
des moyens de détection (12) pour détecter la distance entre un obstacle (19) et un côté (16) du véhicule (10),
des moyens de détermination (14) pour déterminer un angle de braquage du véhicule, et
des moyens de traitement (15) configurés pour :
recevoir des informations indiquant la distance entre l'obstacle (19) et le côté (16) du véhicule (10) par les moyens de détection (12) ;
recevoir des informations indiquant l'angle de braquage du véhicule (10) par les moyens de détermination (14) ;
calculer un risque qu'au moins une portion du côté (16) du véhicule (10) heurte l'obstacle (19), basé sur la distance entre l'obstacle (19) et le côté (16) du véhicule (10), l'angle de braquage et la longueur du véhicule (10), et
activer des moyens (20) pour avertir du risque de heurter l'obstacle si le risque calculé est supérieur à une valeur seuil, **caractérisé en ce que**
les moyens pour avertir du risque comprennent des moyens pour produire un premier signal d'avertissement, indiquant que le conducteur devra réduire l'angle de braquage ou reculer pour trouver une meilleure position pour tourner, et un deuxième signal d'avertissement, indiquant qu'il n'est pas possible d'éviter de heurter l'obstacle en changeant l'angle de braquage.

2. Système (11) selon la revendication 1, **caractérisé en ce que** les moyens de détection (12) comprennent au moins un capteur (13) configuré pour détecter la distance entre l'obstacle (19) et le côté (16) du véhicule (10).

3. Système (11) selon la revendication 2, **caractérisé en ce que** deux capteurs (13) sont disposés sur le côté (16) du véhicule (10).

4. Système (11) selon la revendication 3, **caractérisé en ce que** les capteurs (13) sont des composants d'un système de mesure de distance par ultrasons ou radar ou lidar.

5. Système (11) selon l'une des revendications 1 à 4, **caractérisé en ce que** les moyens (20) pour avertir du risque comprennent un système d'avertissement pour alerter un conducteur.

6. Système (11) selon la revendication 5, **caractérisé en ce que** le système d'avertissement comprend un affichage visuel et/ou un générateur de signal sonore.

7. Système (11) selon l'une des revendications 1 à 6, **caractérisé en ce que** les moyens (20) pour avertir du risque comprennent des moyens pour ajuster automatiquement le déplacement du véhicule.

8. Système (11) selon la revendication 7, **caractérisé en ce que** les moyens pour ajuster automatiquement le déplacement du véhicule comprennent des moyens de contrôle de l'angle du volant et/ou du freinage du véhicule.

9. Système (11) selon l'une des revendications 1 à 8, **caractérisé en ce que** l'unité de traitement (15) est en outre configurée pour prévoir la trajectoire du côté (16) du véhicule (10), basé sur l'angle de braquage et sur la longueur du véhicule (10), déterminer la position de l'obstacle (19) et calculer le risque que le côté (16) du véhicule (10) heurte l'obstacle (19), basé sur la trajectoire prévue du côté (16) du véhicule (10) et sur la position de l'obstacle (19).

10. Méthode de détermination du risque qu'un véhicule (10) heurte un obstacle (19) en tournant, comprenant :
détecter la distance entre un obstacle (19) et un côté (16) du véhicule (10) ;
déterminer l'angle de braquage du véhicule (10),
calculer le risque qu'au moins une portion du côté (16) du véhicule (10) heurte l'obstacle (19), basé sur la distance entre le côté (16) du véhicule (10) et l'obstacle (19), l'angle de braquage et la longueur du véhicule (10), et
déclencher un avertissement si le risque calculé est supérieur à une valeur seuil, **caractérisé par** :
produire un premier signal d'avertissement au cas où le conducteur doit réduire l'angle de braquage ou reculer pour trouver une meilleure position pour tourner, ou un deuxième signal d'avertissement au cas où il n'est pas possible d'éviter de heurter l'obstacle en changeant l'angle de braquage.

11. Méthode selon la revendication 10, comprenant en outre prédire la trajectoire du côté (16) du véhicule (10), basé sur l'angle de braquage et la longueur du véhicule (10), déterminer la position de l'obstacle (19) et calculer le risque que le côté (16) du véhicule (10) heurte l'obstacle, basé sur la trajectoire prévue du côté (16) du véhicule (10) et sur la position de l'obstacle (19).

12. Méthode selon la revendication 11, **caractérisée en ce que** la longueur du véhicule (10) est la longueur du côté du véhicule ou la longueur de l'empattement.

13. Méthode selon l'une des revendications 10 à 12, **caractérisée en ce que** le déclenchement de l'avertissement comprend l'activation d'un indicateur visuel et/ou d'un indicateur sonore et/ou l'ajustement de l'angle de braquage et/ou l'ajustement du freinage du véhicule.

14. Véhicule comprenant un système d'aide à la conduite (11) selon l'une des revendications 1 à 9.

15. Produit de programme, comprenant un code de programme d'ordinateur concrètement incorporé sur celui-ci qui, lorsque exécuté sur un processeur, entraîne la mise en oeuvre de la méthode de l'une des revendications 10 à 13 par le processeur.
